# EUROPEAN PATENT APPLICATION

(11) **EP 1 667 054 A1**
(43) Date of publication of application: **07.06.2006**
(21) Application number: 03751274.6
(22) Date of filing: 17.09.2003
(51) Int. Cl.: G06K 19/00

(54) **RECOGNITION CODE BASED ON COMBINATION OF ELEMENT CELLS AND RECOGNITION CODE SHEET**

(71) Applicant: Tsube Sangyou Kabushiki Kaisha, Tokyo 130-0012 (JP)
(72) Inventor: MATSUDA, Masayuki, Kokubunji-shi, Tokyo 185-0032 (JP); SUZUKI, Yoshiro, Chiba-shi, Chiba 263-0032 (JP); SAITO, Shizuo, Yotsukaido-shi, Chiba 284-0024 (JP)
(74) Representative: Strasser, Wolfgang
(86) International application number: PCT/JP2003/011836
(87) International publication number: WO 2005/029398

(57) **Abstract**

Instead of the conventional 2-value bit code string of one-value recording (non-record is 0), the least number of types of elements are used for recording the cell numeral information and zero information and the non-record space is made to be a function code, thereby saving the data space and increasing the integratlon. For this, a unit module is mode to be multinary cell information. Element information is expressed by a plurality of elements E₁ to Eₙ composed of it basic numeral and a positive or negative multiple (induding equi-multiple). An arbitrary element from E₁ to Eₙ and combination of the elements serve as cell numeral information and zero information while a non-element cell (space) B₀ is made to be a function code. A plurality of elements Bₜ to Bₐ and a combined element are made to have an intensity structure of light reflectance by the or concentration and density.

## Description

### Technical Field

This invention relates to an element cell and non-element cell recognition code, and recognition code sheet, that is a high-integration information code having freedom of shape and good usability compared to the one-value 2-value , code system used conventionally, has a wide range of application and enables accurate information recognition.

### Background Art

Barcode symbol characters are a typical optical recognition code system that are conventionally known.

With the JAN code (JIS-X-0501) in which a black bar is 1 and a white bar (space) is 0, a 2-value level bit code of one-value recording is a unit module, and the numerics 0 and 1⁻ 9 are used to express one character in 7 module units.

Strings of modules of a 2-value level system in which a non-record space (unrecorded base material or blank portion) is taken to be zero information form a row of black bars and white bars (white spaces) that in size are one, two or three unit modules wide, and for accurate recognition of unit modules with synchronized time measurement it is necessary to differentiate a white bar from an ordinary space by using a code zone directive code (start, stop and other such codes) to specify that a non-record space is a white bar.

There is always a correlation between error and the size of the black bars and white bars (spaces) of this 2-value level system. Although the record precision of black bars may be rigorously controlled, coping with deformation of the code medium is difficult, restricting the fields of utilizataon.

Code 39 and Codabar/NW-7 (JIS-X-0503) barcodes consist of four types or code bars, narrow and double-width black and white bars (spaces), but conceptually are no different from utilizing spaces for two kinds of white bars.

Practical high-integration two-dimensional codes based on bit codes arc also conceptually the same from the record, non-record 2-value level, a two-step procedure using large amounts of preset software and redundancy graphic pattern recognition to specify practical code zones, locations and quantities, as well as recognizing practical codes in accordance with specific algorithms and performing bit output; in the case of an alphanumeric code based OCR (Optical Character Reader) system, it is a method in which the individual alphanumeric codes recognized and broken down into a large quantity of data arc compared with basic data and the information allocated to the alphanumeric codes is selected and output as bits.

Therefore, there is a need for an easy to recognize, high-integration, high-reliability code with low redundancy for multiditnensionalizing fields of application, and for a recognition method.

### Disclosure of the Invention

In the present invention, a unit module is made to be multinary cell information to save the data space and increase the integration, and with respect to the unit cell, element information is expressed by a plurality of elements E₁ to Eₙ composed of a basic numeral and a positive or negative multiple (including equi-multiple), and an arbitrary element from E₁ to Eₙ and combination of the elements serve as cell numeral information.

However, with a cell that expresses positive numeral information, negative numeral information, depending on the n-ary, there arc cases in which not all numeral information is expressed by said cell, in which case it is done by combining it with adjacent cells.

In the present invention, moreover, a set of element cells combining a combination of E₁ to Eₙ is made to be a saturated element cell Bs, and saturated element cell Bs is made to be zero information.

Also, if there is a combined element cell of combined elements not corresponding to cell numeral information, saturated element cell Bs, that combined element cell is made to be a function code defined as combined element cell B'o or B"o. An element from E₁ to Eₙ and a combined element cell of a combination thereof form unit module information and express N-ary positive numeral information, negative numeral information and zero information. In the present invention, a portion not expressed by an element cell is taken to be a non-element cell Bo, and is made to be a function code.

In an element cell combination with the added function code Bo, the function code Bo serves to facilitate the recognition method by forming a recognition code in which element cells of the same type are not continuous.

In addition, due to the function code Bo in the present invention, redundancy graphics arc omitted, and count synchronization by time measurement is also unnecessary.

In addition, due to the function code Bo in the present invention, data modification by addition can be facilitated.

In addition, the function code Bo in the present invention enables high-precision recognition that is not subject to the effects of dimensional variation or shape deformation of element cells and non-element cells.

In addition, the function code Bo in the present invention facilitates recognition that can handle code medium deformation.

In addition, by making the unit module in the present invention multinary cell information, space can be saved and integration increased.

In addition, information is expressed by an element cell composed of a single element from E₁ to Eₙ or a combination of elements E₁ to Eₙ, an element cell or space that is not peripheral information thereto is taken to be a non-element, and said non-element cell has a function.

In addition, in claim 1 in which one of the element cells is made to be zero information, and, in addition, in claim 1 or 2 in which an element cell and a non-element cell arc combined and, in addition, in claims I to 3 in which part of the combined element cell is made to be a function code, and, in addition, in claims 1 to 3 in which a set of element cells combining a combination of E₁ to Eₙ elements is made to be saturated element cell Bs, and a set is made to be function element cell B'o, non-element cell Bo, saturated element cell Bs is made to be zero information, function element cell B'o and non-element cell Bo are made to be function codes.

In addition, in the expression of cells of E₁, E₂ elements in which a basic numeral of a binary or ternary unit cell is made to be the E₁ element, and a negative equi-multiple of the basic numeral is made to be the E₂ element, in an element cell combination in which the E₁, E₂ elements are combined is made to be saturated element cell Bs, a non-element cell is made to be Bo, cell numeral information is expressed by the E₁, E₂ elements, zero information by the saturated element Bs, and non-element Bo is made to be a function code.

In addition, E₂ element described in claim 6 is made to be twofold the basic numeral.

In addition, in the expression of cells of E₂₁, E₂₂, E₂₃ elements when the basic numeral of a septenary unit cell is made to be the E₂₁ element, twofold the basic numeral is made to be the E₂₂ element, and fourfold the basic numeral is made to be the E₂₃ element. in an element cell combination in which an element that combines all the E₂₁, E₂₂, E₂₃ elements is made to be saturated element cell Bs, a non-element cell is made to be Bo, cell numeral information is expressed by E₂₁, E₂₂, E₂₃ and combined elements of two types, zero information by saturated element Bs, and non-element Bo is made to be a function code.

In addition, when the E₂₃ element described in claim 8 is made to be negative threefold the basic numeral, and, in addition, when in the expression of a cell of E₂₁, E₂₂, E₂₃, elements the basic numeral of a senary unit cell is made to be the E₂₁ element, twofold the basic numeral is made to be the E₂₂ element, threefold the basic numeral is made to be the E₂₃ element, in an element cell combination in which an element that combines all the E₂₁, E₂₂, E₂₃ elements is made to be saturated element cell Bs, an element cell that combines E₂₁ and E₂₂ is made to be B'o, a non-element cell is made to be Bo, cell numeral information is expressed by a combination of two types of elements excluding E₂₁, E₂₂, E₂₃ and B'o, zero information by saturated element Bs, and element cell Bo and non-element cell Bo are made to be function codes.

In addition, an element cell that combines E₂₁, E₂₂ described in claim 10 is made to express zero information, and saturated element cell Bs is made to be a function code, and, in addition, the senary unit cell described in claim 10 is made to be a quinary element cell combination in which the element cell that combines E₂₁, E₂₂ is made to be function code B"o, and B'o, B"o, non-element Bo are made to be function codes.

In addition, the element cell combination in claim 1, 2 is made to be a code structure that divides parts of graphics or characters into element cells and non-element cells, and, in addition, the plurality of elements from E₁ to Eₙ according to claim 1, 2 and elements combined for information are made to be an element cell combination having an intensity structure of light reflectance by hue or concentration and density.

### Brief Description of the Drawings

Figure 1 is a diagram explaining the concept of the present invention, and Figure 2 shows a general -ary number matrix.
Figure 3 shows tables of positive, negative binary, ternary matrices of element cell information, and Figure 4 shows tables of positive ternary matrices of element cell information.
Figure 5 is diagram explaining the concept of 3-element, combined element and non-element, Figure 6 is a table showing a positive quinary matrix of element cell information, and Figure 7 is a diagram explaining the concept of combined 3-element element cell, non-element cell and 3-element cell.
Figure 8 shows a table of positive, negative quaternary matrix element cell information, and a diagram explaining the concept thereof, and Figure 9 shows a table of positive senary matrix element cell information, and a diagram explaining the concept thereof.
Figure 10 is a table showing positive septenary matrix element cell information, and Figure 11 is a table showing positive, negative septenary matrix element cell information.
Figure 12 is a diagram explaining the concept of 4-element element cell and non-element cell, and Figure 13 is a table showing positive 15-ary matrix element cell information.
Figure 14 is a table showing positive, negative 15-ary matrix element cell information, and Figure 15 is a comparative table of bit and Bit₃ data volumes.
Figure 16 is a diagram showing an example of a combination in which non-element cell Bo is given a trigger function (function 1), Figure 17, similarly, is a diagram showing an example of a combination in which non-element cell Bo is given a pre-element cell directive function (part 1), and Figure 18 is also a diagram showing an example of a combination in which non-element cell Bo is given a pre-element cell directive function (part 2).
Figure 19 is a diagram showing an example of a design code and a code design, and Figure 20 is a diagram showing an example of a graphic or character division code structure.
Figure 21 is a diagram explaining a compound eye light-receiving recognition system, and Figure 22 is a diagram explaining the concept of threshold value (2-value data) of single color, mixed colors obtained from filter transmission of reflected colored light.
Figure 23 is a diagram explaining the relationship between compound eye recognition data and ternary element cell information, and Figure 24 is a diagram explaining element cell recognition by the additive color mixing method.
Figure 25 is a diagram explaining the concept of intensity structure of light reflectance by concentration and density, and Figure 26 is an explanatory diagram showing the relationship between the recognition threshold value and photoelectric effect level of Figure 25.

### Explanation of symbols

11
12
13
14
21
22
23
24
25
44
172
196

### best Mode for Carrying out the Invention

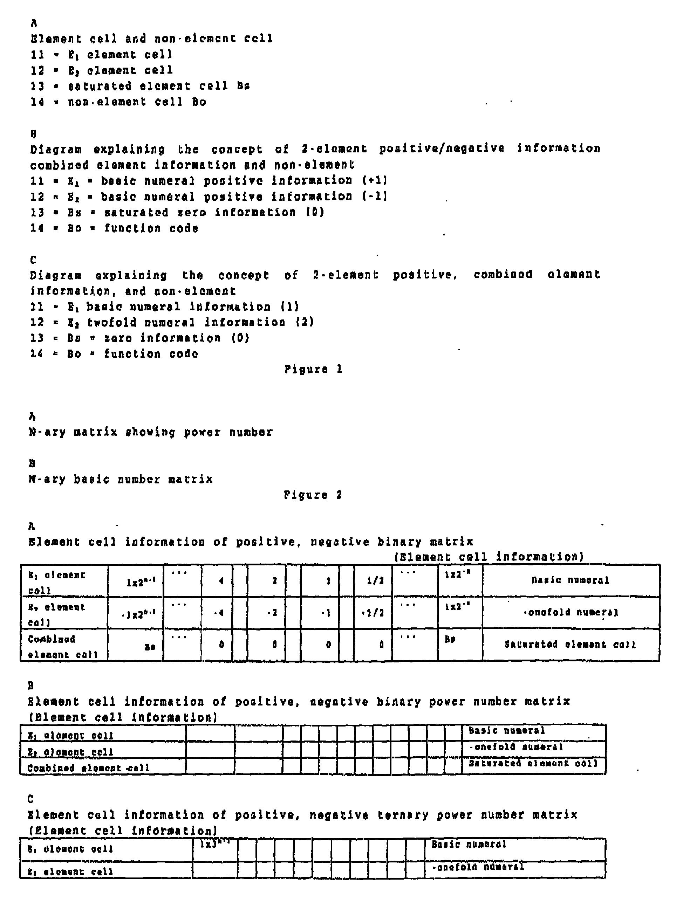

To expound the present invention in more detail, it will now be explained with reference to the attached drawings. Figure 1-A is a diagram explaining the concept showing an clement cell and non-element cell expressed by the two types of elements E₁, E₂.

Cell numeral information is expressed by E₁ clement cell 11 and E₂ element cell 12, the combined E₁ element cell 11 and E₂ element cell 12 is made to be saturated element cell Bs 13, and non-element cell (space) 14 is made to be a function code Bo.

The combined saturated element cell Bs 13 is made to be an element cell that expresses zero information, and the non-element cell Bo 14 is made to be a function code.

Figure 2-A is a table showing an N-ary matrix in which a basic numeral in each N-ary column is shown as a power number (next column up is N-times),

Figure 2-B is a table showing an N-ary matrix in which a basic numeral is shown in each N-ary column (N-times basic numeral 1 is a higher column 1).

In the element cell of this invention, N-ary basic numeral I is made to be basic element information, and a arbitrary positive or negative multiple numeral element information of the basic numeral combined with an element is made to be N-ary element cell information.

Zero information is expressed by saturated element cell Bs, and unlike a conventional system in which it also served as information, a space is non-element cell Bo, which is utilized as a function code.

Also, a combination of a plurality of element cells indicates the number of N-ary places and the scale.

If in the diagram of Figure 1-B explaining the concept, E₁ element cell 11 is taken to be basic numeral and E₂ element cell 12 as a negative equi-multiple of the basic numeral, E₁ element cell 11 can be taken to be positive value information of the cell basic numeral, and E₂ element cell 12 the negative value information of the basic numeral. Combined element cell Bs 13 becomes an element cell expressing zero information, and non-element cell Bo 14 becomes an element cell made to be a function code.

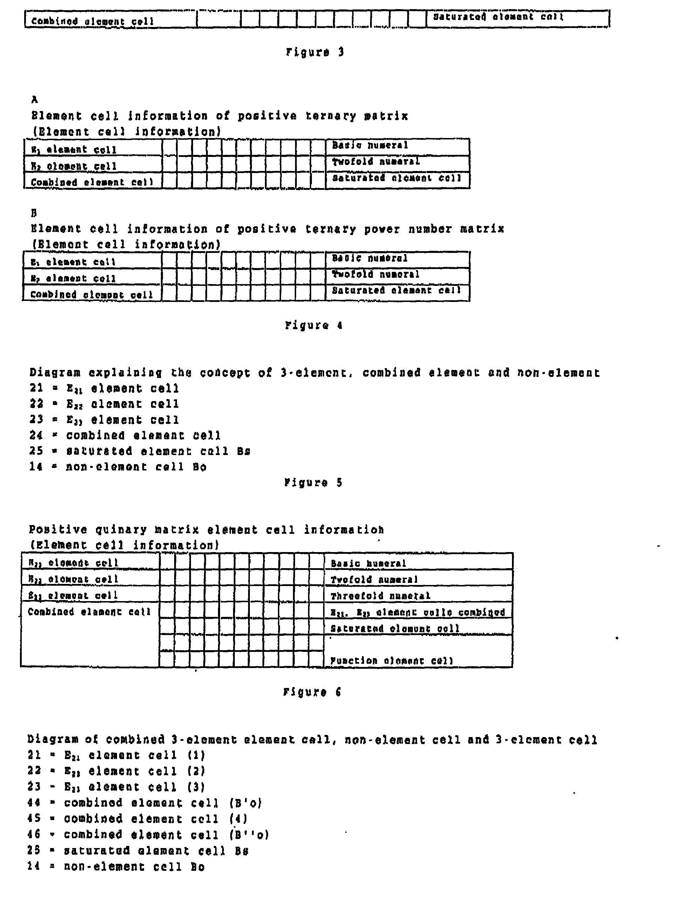

The binary matrix (Figure 3-A) composed of this element cell expresses binary cell negative information, without using the bit redundancy of the conventional bit recording method or complement conversion technique.

The combination of binary element cell information and power number indicating the number of N-ary places and the scale is as shown in Figure 3-B.

The ternary matrices of the element cells of Figure 3-C, as shown in Figure 1-B, do not have positive and negative twofold basic numeral information, so expression of the twofold numeral information is complemented by combining it with adjacent cells (2-10₃-1,-2=-10₃+1).

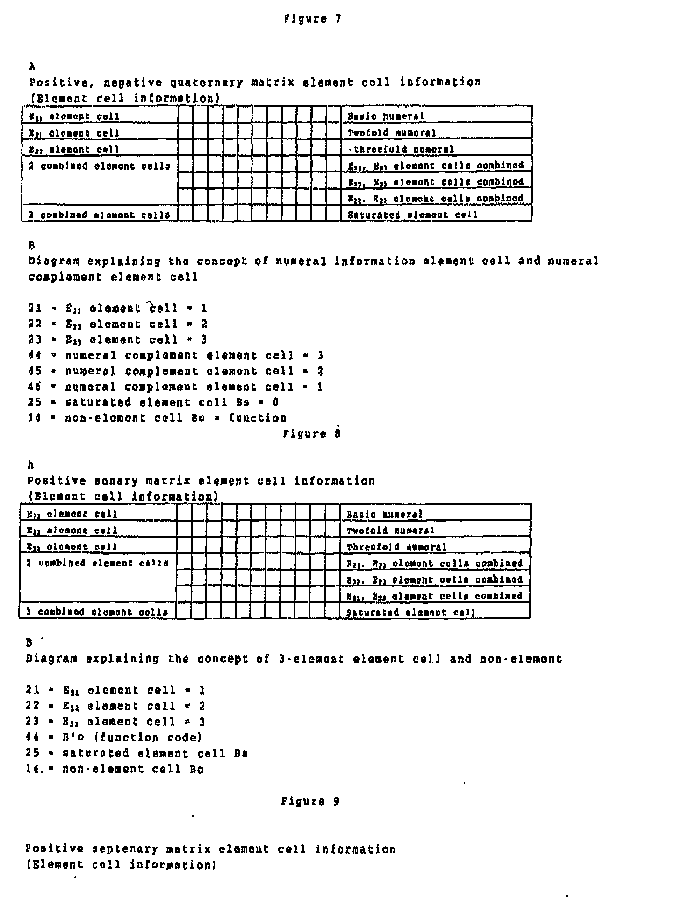

Figure 4-A, Figure 4-B show examples of combinations of number of digits and scale of ternary element cells in which E₁ element is basic numeral, and E₂ element is twofold the basic numeral, as shown in Figure I-C.

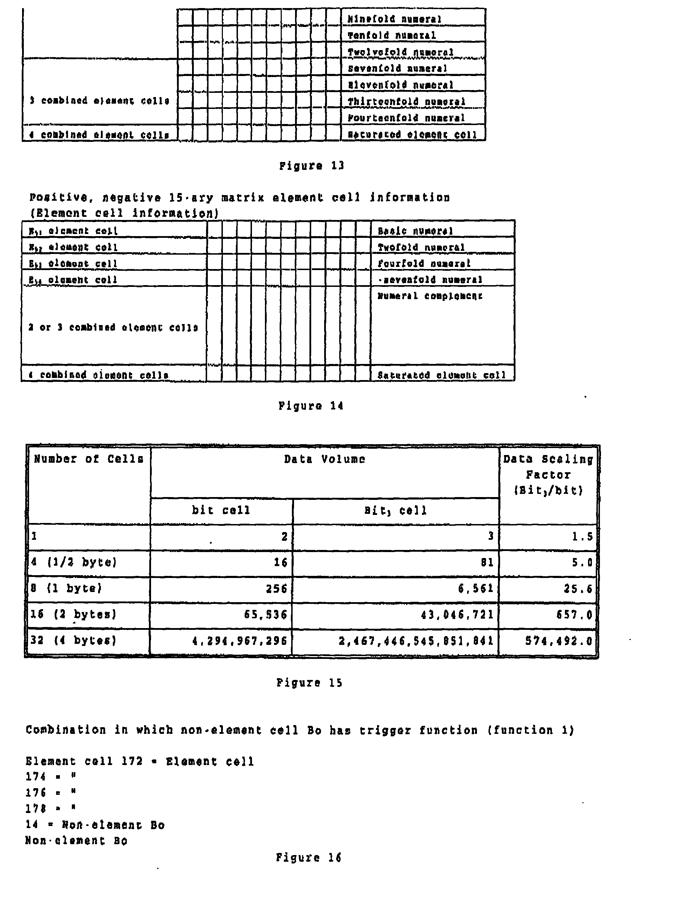

An example of the function code of non-element cell Bo 14 made to have a trigger function between element cells (function 1) is described with reference to Figure 16.

A non-element cell Bo 14 was disposed between element cells expressed by E₁ element cell 11, E₂ element cell 12, and E₁ element cell 11 and B₂ element cell 12 combined (saturated) element cell Bs 13, and before the first element cell and after the final element cell.

The element cell combination (Figure 16) comprises an element cell combination in which element cells are connected by disposing non-element cell Bo 14 between element cells expressing information that arc not connected, with the non-element cell Bo 14 being given a trigger function between element cells that facilitates the recognition method even if there is some dimensional variation in the E₁ element cell 11, E₂ element cell 12, and the combined E₁ element cell 11 and E₂ element cell 12 constituting the saturated element cell Bs 13.

Therefore, before and after the element cells 172, 174, 176, 178 are constituted by the non-element cell Bo 14, so start, end, unit module directives and other such redundancy graphics and redundancy codes required by a conventional code method that uses a space as a code are omitted.

Element ceils 11, 12, 13 and non-element cell Bo 14 added between the element cells have no correlating dimensional relationship, enabling code modification by element cell addition, facilitating recognition that handles deformation of the code medium, enabling the recording of element cell information on media that has a large difference between expansion and contraction, such as fiber or shrink film.

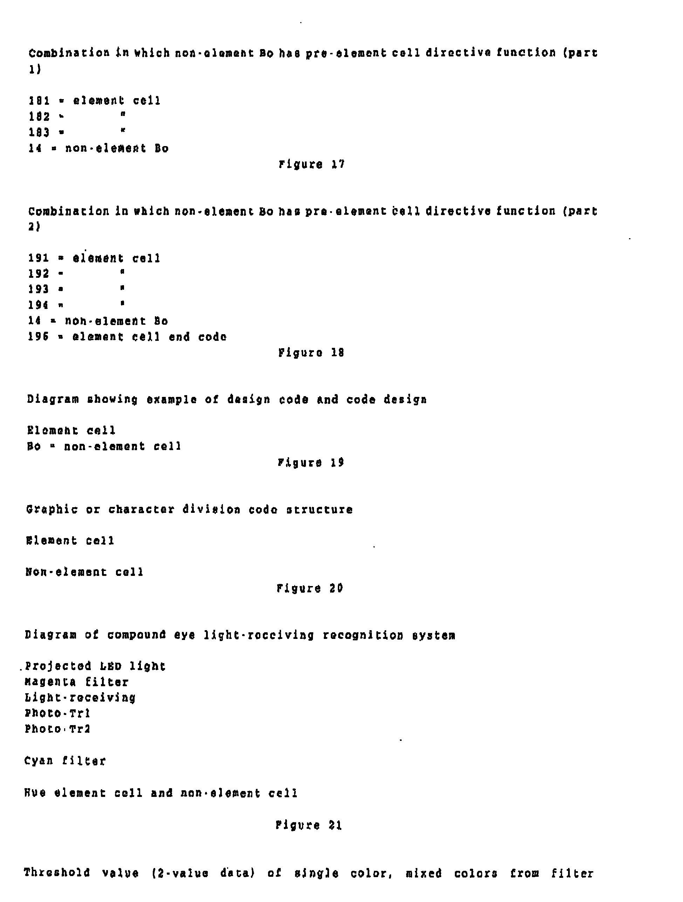

The pre-element cell directive function code that is function 2 of non-element Bo 14 and end directive code are explained with reference to Figure 17, Figure 18.

In a structure of a continuous series of element cells in which the element cell recording density is doubled and non-element cell Bo 14 between the cells is omitted, there is a continuous expression of numerous element cells of the same type.

Figure 17-A is a diagram of part of a continuous combination of element cells in which an odd number of element cells of the same type 181, 182, 183 are displayed adjacently.

In the conventional code method that uses a space as a code, continuous codes of the same type are recognized as unit modules by time measurement or by counting by a specified method.

With the present invention, by making the function code of the non-element cell Bo 14 a pre-element cell directive function code, and converting the expression of the next element cell 182 that is the same type as the element cell 181 of Figure 17-A to the non-element cell Bo 14 in Figure 17-B, an element cell combination is formed in which element cells of the same type arc not continuous, forming an easy recognition method that docs not require time measurement or counting.

In the continuous combination of element cells of Figure 18-A in which an even number of element cells of the same type 191, 192, 193, 194 are displayed adjacently, a continuous combination of elements of the same type is excluded by converting the expression of the 192 element cell in the next position to the 191 element cell, and the 194 element cell in the next position to the 193 element cell, to the non-element cell Bo 14 made to be a pre-element cell directive function code of Figure 18-B.

However, when the 194 element cell in an element cell combination is located at the final position of the matrix, a predetermined element cell end directive code is added.

Figure 5 is a diagram explaining the concept of cell information expressed by element cell 21, E₂₂ element cell 22, E₂₃ element cell 23, combined element cell 24, saturated element cell Bs 25 and non-element cell Bo 14.

When a unit module is made to be multinary element cells and the cells arc expressed by the three elements E₂₁, E₂₂ and E₂₃, the element cell of each element has three types of cell numeral information.

Cell numeral information is expressed by E₂₁ element cell, E₂₂ element cell, E₂₃ element cell, and combined element cell 24 that combines two types of elements.

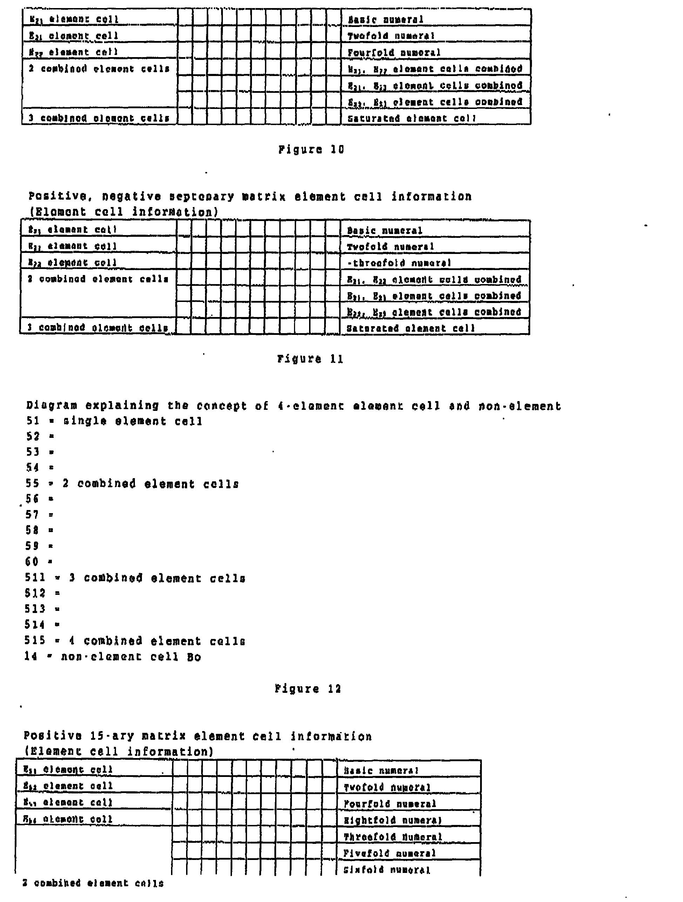

Numeral information complemented by combined element cell is taken to be a numeral complement, and an element cell formed by combining numeral complemented elements is taken to be a numeral complement element cell (Figure 8-B).

The examples of Figure 6, Figure 7 will be used to explain when a unit module is a quinary element cell.

In the quinary element cell shown in Figure 7 in which E₂₁ element 21 is made to be the basic numeral, E₂₂ element 22 is made to be twofold the basic numeral, E₂₃ element 23 is made to be threefold the basic numeral, numeral 4 element cell information is expressed by element cell information in which E₂₁ is numeral 1, E₂₂ is numeral 2, E₂₃ is numeral 3 and combined element cell 45 that combines E₂₁ element 21 and E₂₃ element 23, combined element cell 44 that combines E₂₁ element and E₂₂ element is B'o. combined element coll 46 that combines E₂₂ element and E₂₃ element cell 23 is B"o, and are made to be function codes.

The feature is a combination of high-secrecy security function element cells having a cipher algorithm based on a combination of non-element cell (space) Bo and function element cells B'o, B"o.

A quaternary element cell expressing the positive/negative numeral information shown in Figure 8 will be explained with Figure 8-B. E₂₁ element 21 is made to be the basic numeral, E₂₂ element 22 is made to be twofold the basic numeral, E₂₃ element 23 is made to be negative threefold the basic numeral, and other multiple numeral information is complemented by 44, 45, 46 that combine two elements. 25 that combines three elements is made to be saturated element cell Bs, 14 is made to be non-element cell Bo.

Figure 8-A showed positive/negative quaternary matrix element cell information; even if the positive/negative signs of element numeral information are changed to negative for E₂₁ element, E₂₂ element and positive for E₂₃ element 23, the element cell has the same information expression function. Non-element cell Bo is made to be a function code.

When in the senary element cell shown in Figure 9-B the E₂₁ element 21 is made to be the basic numeral, E₂₂ element 22 twofold the basic numeral, and E₂₃ element 23 threefold the basic numeral, combined element cell 44 of E₂₁ element 21 and Eₙ element 22 will have the same numeral information is the E₂₃ element 23, so the combined element cell 44 can be made to be function code B'o, and non-element cell Bo similarly can be made to be a function code.

Figure 9-A shows an example of senary matrix element cell information.

Figure 10, Figure 11 show examples of septenary matrix element cell information in which the maximum ary element cell information that can be expressed by the concept-explanatory diagram of Figure 5 is made the unit module.

Figure 12 is a concept-explanatory diagram that shows the four types of element cell information of the four elements E₅₁, E₅₂, E₅₃, E₅₄, six types of combined element cell information based on two-element combinations, four types of combined element cell information based on three-element combinations, saturated element cell Bs combining four elements and non-element cell Bo.

With the four elements E₅₁, E₅₂, E₅₃, E₅₄, 15 types of element cell information are expressed: four types of element cell information 51, 52, 53, 54, six types of element cell information 55, 56, 57, 58, 59, 60 that arc combined elements of combinations of an arbitrary two of the elements E₅₁- E₅₄, four types of element cell information 511, 512, 513, 514 that are combined elements of combinations of an arbitrary three of the elements E₅₁⁻ E₅₄, the saturated element cell Bs of 515 that combines all four of the elements E₅₁⁻ E₅₄.

Figure 13, Figure 14 show examples of element cell information of a 15-ary matrix based on the maximum of 15-ary element cells of the concept-explanatory diagram of Figure 12.

With the conventional enlargement of bit units, 4 bits (1/2 byte) are made hexadecimal, but using the 15-ary element cells with the present invention makes it easier to calculate time, which is base-sixty, period recording.

In binary the number of binary numeral unit digits is expressed in bits, but in ternary the number of ternary numeral unit digits is expressed in bit-three (bit3), and a comparison of recordings having the same number of digits (bit and bit3), as shown in the data volume comparison table of Figure 15, when the number of bit digits or bytes (4-digit unit) increases, the data scaling factor produces astonishing numbers. The amount of data in the case of a ternary bit unit recording system is far greater than in the case of a binary bit unit recording system.

The present invention has a structure in which non-element cells Bo are disposed around an element cell recorded by a plurality of elements E₁ to Eₙ (Figure 19-A), and if these element cell (information), non-element cell Bo (function) arc arranged in the matrix form shown in Figure 19-B, the information can be readily recognized even by CCD (charge-coupled device) image.

In addition, because a feature of the present invention is that the only essential condition is that the placement of element cells of unrestricted size and unrestricted shape be alternated with non-element cells, it is possible to express information as visual characters, graphics and the like such as in the example shown in Figure 19-C.

In addition, because a feature of the present invention is that it can be constituted of elements of unrestricted size and unrestricted shape, non-elements, information can be formed into arbitrary shapes using said elements, non-elements (Figure 19-D), enabling the simultaneous expression of language for humans to see and information language for computers, greatly diversifying the fields of system application.

Using a code structure that divides parts of the graphic or character shown in Figure 20 into element cell portions and non-clement cell Bo portions makes it simple to amalgamate visual language and computer language. Moreover, scanning that is simple with good operability using a low-cost pen type sensor is possible, forming a space-saving recording system with no language duplication.

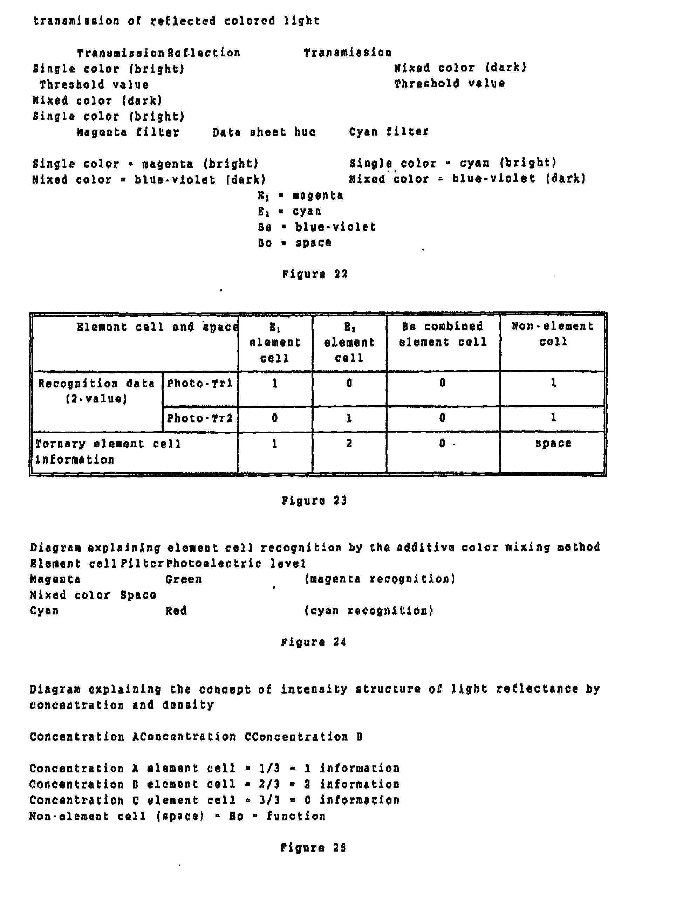

With the ternary cell code matrix of Figure I constituted of two types of color element with no gradation in which E₁ element is magenta, E₂ element is cyan, element cell information is readily recognized by the photoelectric effect of the subtractive mixture of the compound eye light-receiving unit of Figure 21.

Figure 21 is a block diagram relating to a simple compound eye recognition system that uses a dark-sheet subtractive mixture method based on clement cell information comprising a binary element cell based on two types of hue element (E₁, E₂), a ternary element cell and non-element cell Bo.

The compound eye recognition system is composed of one white-light LED, two light-receiving devices constituted by a phototransistor with a magenta filter (PHOTO-Tr1) and a phototransistor with a cyan filter (PHOTO-Tr2), binarizing the photoelectric effect of each of the light-receiving devices.

Figure 22 is a schematic depiction of the analog data of the photoelectric effect of each of the light-receiving devices being made into 2-value data in accordance with a threshold value setting.

Magenta (E₁ element), cyan (E₂ element) reflected light transmitted by a same-color hue filter becomes single-color light, and transmitted by a tlifferent-color hue filter becomes mixed-color light by subtractive mixture.

Blue-violet (combined element Bs) reflected light transmitted by a hue filter becomes mixed-color light, non-element (Bo) reflected light transmitted by a hue filter becomes single-color light. Element cell and non-element cell are differentiated by the logical product (AND circuit) of 2-value data of the analog data of the photoelectric effect of the single-color light, mixed-color light based on threshold values set in the respective circuits, and the element cell information output.

In addition, as shown in Figure 23, the data are combined to form ternary (bit3) element cell information. Figure 24 shows an example of complementary data extraction by the additive color mixing method based on filter transmission using a green filter and red filter. (This method is a know technology that is widely used for color resolution for printing, CCD color imaging, and so forth)

Color CCD imaging picture elements uniformly arrange element cell groups and non-element cell groups. Element cell information of the present invention is analyzed by an easy information conversion algorithm.

Figure 25 shows an example of a ternary clement cell recorded using cell element concentration (gradations or distribution density).

The concentration ratios of E1 vs. E2 vs. Bs are made to be 1/3 vs. 2/3 vs. 3/3, basic numeral information is expressed by E₁ element, twofold the basic numeral information is expressed by E₂ element, zero information is expressed by E₁ element and E₂ element combined element Bs.

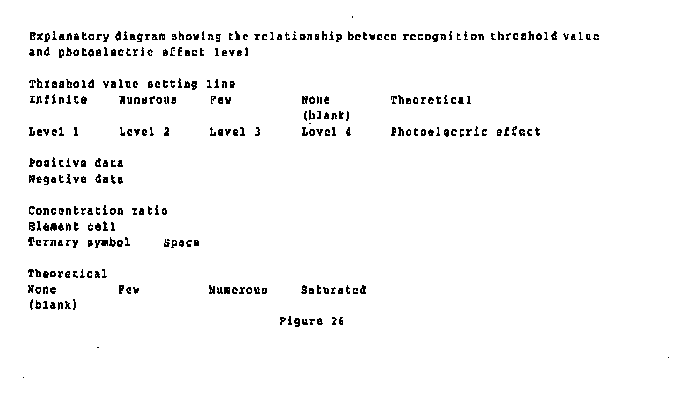

Element cell information recognition by this method is implemented with one set of light-emitting, light-receiving devices, the photoelectric effects of received light is divided into four levels at three threshold value points in the example shown in Figure 26, differentiating element cell information (0, 1, 2) and non-element cell information.

### Industrial Applicability

Decimally expressed 80,120 in Kanji is 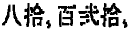 making it easy to leave out the void (zero symbol). However, the binary bit code numerals are 1010000, 1111000. In a one-value numeral in which the void (zero symbol) is left out, it is 11, 1111, making it difficult to judge how many voids (zero symbol) are in what position, so code zone and position are specified, displaying ■ □■□□□□■■■■□□□.

An optical recognition barcode is a row of record black bars and non-record white bars (spaces) of multiple sizes and widths, and it is impossible to recognize unit bits without a method that adds support means.

There is always a correlation between the size error of record black bars and non-record white bars (spaces). If record black bars become thicker than standard, the non-record white bars (spaces) become thin, and conversely, if the black bars become thin, the white bars become thick, producing count synchronization error.

Also, if the code medium deforms, the code standard is disturbed, making it difficult to cope with.

As the data amount increases, the code string becomes longer and it becomes difficult to maintain a constant manual moving speed with cheap pen type readers, producing many recognition errors.

A high-precision scanning system is required if read precision is to be increased. Moreover, standards that with respect to the quiet zone connecting characters arc rigorous, data modification by addition cannot be done, and even if a code string is invented that adds a high burden to convenience, it does not have functions that apply.

In practical, high-integration secondary codes, too, that correspond to computer 2-value codes, there is no change in the philosophy of record, non-record based 2-value level, with many recognition methods being employed that use image sensors comprising a two-step procedure of large amounts of preset software and redundancy graphic pattern recognition being used to specify code zones, locations and quantities, and recognition and output of bit codes according to specified algorithms, data modification by addition being impossible, similarly to barcodes.

Character codes for OCR consist of code strings that can be added to and the zero code expressed, but there is a limit to the space that can be saved. Also, the pattern recognition data of each code and the basic data have to be compared, making it difficult to improve into an easy system.

The present invention is a development relating to new code system products and code recording media featuring print codes that have the best cost efficiency and high convenience.

Therefore, the industrial applicability is expanded befitting the information society of the 21 century by design implementation of code matrices (design codes), deformed media codes (fuzzy codes), high-integration, space saving data recording based on ternary cell matrices simple recognition systems that utilize space functions between cells, and the completion of equipment deemed impossible to realize with technology development that is an extension of the conventional digital print philosophy.

The design implementation of code matrices (design codes) enables amalgamated recording of visual characters, graphics and machine data codes, forming items with high multifunction at a print media cost that remains unchanged (application to publications, toys, indexes, searches)

Distribution, production were the ultimate target challenges for deformed media codes (fuzzy codes), but they are expanding to these unapplied fields, (Cleaning, deform processes such as bending, harnesses and other items having no definite shape)

Easy code addition facilitates ternary cell matrix positive/negative incremental recording. (Distribution, production, increase and decrease of supervisory processes, yield recording)

Regarding high-integration data recording, the data recording field diversifying with changes in the information society will be utilized in habitat segregation as the lowest-cost print code system. (Design code based text-voice conversion, production histories, merchandise data in which the emphasis is trust, reliability)

High-precision simple recognition systems will not only have multiple product applications but will also create new systems and products that in combination with conventional products with built-in image recognition systems will speedily spread.

## Claims

1. Recognition code and recognition code sheet **characterized in that** information is expressed by an element cell composed of a single element from Eₗ to Eₙ or a combination of elements Eₗ to Eₙ, an element cell or space that is not peripheral information thereto is taken to be a non-element, and said non-element cell has a function.

2. The recognition code and recognition code sheet of claim 1 **characterized in that** one element cell is made to be zero information.

3. The recognition code and recognition code sheet of claim 1 or 2, **characterized by** combining element cell and non-element cell.

4. The recognition code and recognition code sheet of claims 1 to 3, in which part of the combined element cell is made to be a function code.

5. The recognition code and recognition code sheet of claims 1 to 3 in which an element cell in which a set of element cells that combine E₁ to Eₙ elements is made to be saturated element cell Bs, a set is made to be function element cell B'o, non-element cell Bo, **characterized by** an element cell combination in which saturated element cell Bs is made to be zero information, and function element cell B'o and non-element cell Bo are made to be function codes.

6. A recognition code and recognition code sheet in which an expression of a cell of E₁, E₂ elements in which a basic numeral of a binary or ternary unit cell is made to be the E₁ element, and a negative equi-multiple of the basic numeral is made to be the E₂ element, **characterized by** an element cell combination in which cell numeral information is expressed by the E₁, E₂ elements, zero information by the saturated element Bs, and non-element Bo is made to be a function code.

7. The recognition code and recognition code sheet described in claim 6 in which the E₂ element is made to be twofold the basic numeral.

8. A recognition code and recognition code sheet in which an expression of a cell of E₂₁, E_{22,} E₂₃ elements when the basic numeral of a septenary unit cell is made to be the E₂₁ element, twofold the basic numeral is made to be the E₂₂ element, and fourfold the basic numeral is made to be the E₂₃ element, **characterized by** an element cell combination in which an element that combines all the E_{21,} E₂₂, E₂₃ elements is made to be saturated clement cell Bs, a non-element cell is made to be Bo, cell numeral information is expressed by E_{21,} E_{22,} E₂₃ and combined elements of two types, zero information by saturated element Bs, and non-element Bo is made to be a function code.

9. The recognition code and recognition code sheet described in claim 8 in which the E₂₃ element is made to be negative threefold the basic numeral.

10. A recognition code and recognition code sheet in which an expression of a cell of E₂₁, E₂₂, E₂₃ elements when the basic numeral of a senary unit cell is made to be the E₂₁ element, twofold the basic numeral is made to be the E₂₂ element, threefold the basic numeral is made to be the E₂₃ element, **characterized by** an element cell combination in which an element that combines all the E₂₁, E₂₂, E₂₃ elements is made to be saturated element cell Bs, an element cell that combines E₂₁ and E₂₂ is made to be B'o, a non-element cell is made to be Bo, cell numeral information is expressed by a combination of two types of elements excluding E₂₁, E₂₂, E₂₃ and B'o, zero information by saturated element Bs, and element cell Bo and non-element cell Bo are made to be function codes.

11. The recognition code and recognition code sheet described in claim 10 **characterized by** an element cell combination in which the element cell that combines E₂₁, E₂₂ is made to express zero information, and saturated element cell Bs is made to be a function code.

12. The recognition code and recognition code sheet described in claim 10 **characterized by** an element cell combination in which the E₂₁, E₂₂ combined element cell in the senary unit cell is a quinary element cell combination that is made to be function code B"o, and B'o, B"o, non-clement Bo are made to be function codes.

13. The recognition code and recognition code sheet of claim 1, 2 **characterized by** an element cell combination having a code structure that divides parts of graphics or characters into element cells and non-element cells.

14. The recognition code and recognition code sheet according to claim 1, 2 **characterized by** an element cell combination in which the plurality of elements from Eₜ to Eₙ and elements combined for information are made to be an element cell combination having an intensity structure of light reflectance by hue or concentration and density.
